# EUROPEAN PATENT APPLICATION

(11) **EP 1 843 415 A1**
(43) Date of publication of application: **10.10.2007**
(21) Application number: 06447049.5
(22) Date of filing: 06.04.2006
(51) Int. Cl.: H01M 4/86, H01M 8/18

(54) **Bifunctional gas diffusion electrodes**

(71) Applicant: VLAAMSE INSTELLING VOOR TECHNOLOGISCH ONDERZOEK (VITO), 2400 Mol (BE)
(72) Inventor: Spaepen, Staf, 2460 Kasterlee (BE); Van Bogaert, Gilbert, 2400 Mol (BE)
(74) Representative: pronovem

(57) **Abstract**

A bifunctional gas diffusion electrode (1) with a high degree of reversibility is obtained through a spatial separation of the catalysts for gas evolution and gas consumption by providing a shielding layer (3) between the two catalyst layers (2,4). This shielding layer is porous, electronically conductive, has little or no catalytic activity for gas consumption and has a high corrosion resistance under the prevailing electrochemical conditions. The catalysts and the shielding layer are chosen in such a way that the catalyst for gas consumption (4) is not participating when the electrode is in electrolysis mode and is fully participating in fuel cell mode.

## Description

### Technical field

The present invention relates to bifunctional catalytic electrodes, operating alternately in gas evolution and gas consumption mode, and to electrochemical cells comprising such electrodes.

### Background art

Reversible electrolysis/fuel cells could offer a solution for storing excess electrical energy produced by fluctuating energy sources such as wind or solar energy and making it available when demand peaks. Such cells can operate reversibly both as an electrolysis cell and as a fuel cell.

In an electrolysis cell an electric current is used to force oxidation and reduction reactions. These reactions are catalysed by electrodes, which are generally porous and thus allow to a certain extent diffusion of the gaseous and liquid reactants and reaction products. Moreover, the electrodes must be good electronic conductors. In fuel cell mode, the cell is connected to an external load, and the reaction products from the electrolysis mode recombine into the initial constituent(s) and cause a flow of electric current through the load.

In its simplest form, a reversible electrolysis/fuel cell consists of at least two electrodes, separated by an electrolyte. The electrode at which an electron producing reaction occurs is referred to as the anode. The electrode at which an electron consuming reaction occurs is referred to as the cathode. The transfer of electronic charge between anode and cathode occurs through an external circuit. The electrolyte in between cathode and anode must be a poor electron conductor to prevent internal short-circuiting. However, it must have a good ionic conductivity to internally close the electric circuit.

A typical example is a reversible hydrogen-oxygen electrolysis/fuel cell. Considering an alkaline electrolyte (KOH) and in electrolysis mode, an oxygen evolution reaction according to:

*20H⁻*→½ *O*₂+*H₂O*+*2e⁻*

takes place at the anode. The hydroxyl ion is generated in a hydrogen evolution reaction from water at the cathode:

2*H*₂*O*+2*e⁻→H*₂+2*OH⁻.*

In fuel cell mode, the anode catalyses the oxidation of hydrogen gas:

*H*₂+2*OH*⁻→2*H*₂O+2*e⁻.*

The hydroxyl ion was transferred through the electrolyte from the cathode, where it was generated in an oxygen reduction reaction:

½*O*₂+*H₂O*+*2e⁻→2OH⁻.*

In a reversible hydrogen/oxygen electrolysis/fuel cell with two electrodes, it is possible for one electrode to always act as anode, while the other always acts as cathode, no matter if the cell works in electrolysis (evolution) mode or in fuel cell (gas consumption) mode. This implies that the anodic electrode evolves oxygen during electrolysis mode and consumes hydrogen during fuell cell mode, while the cathodic electrode consumes oxygen during fuell cell mode and evolves hydrogen during electrolysis mode. Such a design is known from patent EP 0472922 A (FRAUNHOFER GES FORSCHUNG) 26.07.1991. Such a configuration is however not common practice, as the transition from electrolysis mode to fuel cell mode and vice versa requires the substitution of hydrogen and oxygen gases in the same compartments. Another possibility for a reversible electrolysis/fuel cell is to have one electrode acting as anode during the electrolysis mode and as cathode during the fuel cell mode, while for the other electrode, the roles are reversed. Indeed, keeping the consumption and evolution of each of the oxygen and hydrogen gases confined to a separate electrode simplifies cell design.

The present invention is related to this latter configuration of a reversible electrolysis/fuel cell, wherein each electrode operates alternately as anode and cathode and catalyses the electrochemical reaction of the same gas (e.g. hydrogen or oxygen). Such an electrode, that combines anodic and cathodic functions is referred to as bifunctional. As a bifunctional electrode is always in contact with the same gas, it is common to refer to it with the gas it is in contact with; e.g. in the above case respectively as the oxygen electrode and the hydrogen electrode.

The bifunctional use of these electrodes, however, poses a number of electrode design problems and is also the cause of premature electrode degradation. Firstly, electrodes suitable for oxygen evolution need to be hydrophilic to allow the presence of electrolyte at the electrochemically active sites. However, the hydrophilic nature causes this electrode to be readily flooded by electrolyte during oxygen reduction and thus limits fuel cell performance. Secondly, electrodes suitable for oxygen reduction need to be hydrophobic to allow oxygen to reach the electrochemically active sites. However, the hydrophobic nature prevents a sufficient availability of electrolyte at the electrochemically active sites during oxygen evolution. Thirdly, some electrode constituent materials may be corroded during oxygen evolution causing premature electrode failure.

Improvements that have been proposed in the past concerned either constituent electrode materials, electrode structure, or both. As far as catalyst materials are concerned, patent GB 913595 19.12.1962 discloses a double skeleton electrode consisting of a catalyst skeleton of porous Raney silver or nickel, embedded in a carrier skeleton possessing electronic conductivity. Nickel here acts as a catalyst for oxygen evolution, while silver is the catalyst for oxygen reduction. Furthermore, this electrode may comprise a layer with small pores on the side exposed to the electrolyte, and a layer with large pores on the side exposed to the gas.

An inexpensive material to be used as catalyst for oxygen evolution/reduction reactions is disclosed in patent US 5656388 (CALIFORNIA INST TECHNOL) 12.08.1997. This material is a ternary LaNi₅-based alloy for which the authors report a ready oxygen evolution and reduction on the electrode.

Additional catalyst materials for a bifunctional oxygen electrode are disclosed in patent WO 03032418 (LYNNTECH INTERNATIONAL) 17.04.2003. The electrocatalytic layer of this electrode is composed of a mixture of ruthenium-iridium oxides, platinum black and a fluoropolymer binder. Platinum black is an electrocatalyst for oxygen reduction. Iridium oxide is an excellent electrocatalyst for oxygen evolution, but is rather expensive. A viable alternative presented in the above document are ruthenium-iridium oxides, being less expensive and significantly more electronically conductive than iridium oxide.

The cited document presents moreover a layered structure for the bifunctional electrode, consisting of the electrocatalytic layer active for oxygen evolution/reduction and of a gas diffusion backing layer. The gas diffusion backing provides a structure containing a metal core to which both hydrophilic and hydrophobic regions are bonded and ensures an adequate flow of reactants to and products from the electrocatalyst layer of the electrode.

Multi-layered structures for bifunctional electrodes are known. Such structures may allow for different degrees of hydrophilicity and/or hydrophobicity throughout the electrode so as to control liquid retention. Alternatively, evolution and reduction catalysts may be present in the two (or more) layers, but in varying concentration. An electrode embodying the latter characteristic is known from patent WO 9410714 (AER ENERGY RESOURCES) 28.10.1993. The patent discloses a bifunctional electrode for metal-air cells which prevents gas formation between the electrolyte side of the electrode and the electrolyte. The inventors propose a catalyst layer composed of two sublayers. Both sublayers contain a mixture of the catalyst for oxygen evolution and the catalyst for oxygen reduction, but in different concentrations. Proximate the air side of the electrode, the oxygen evolution catalyst is present in a higher concentration. Proximate the electrolyte side, the oxygen reduction catalyst is present in a higher concentration.

A composite multi-layered bifunctional gas diffusion electrode is disclosed in patent US 5318862 (WESTINGHOUSE ELECTRIC CORP) 07.06.1994. The electrode is composed of a central current collector, consisting of a metal screen embedded in a hydrophobic porous material with hydrophilic fillers. At the air side, a completely hydrophobic layer consisting of low surface area carbon and a binding/non-wetting agent (typically PTFE) is applied onto the metal screen. At the electrolyte side, a hydrophilic layer is applied onto the screen, consisting of a mixture of low and high surface area carbon, a binding/non-wetting agent, an oxygen evolution catalyst (tungsten-based) which also reduces carbon corrosion and an oxygen reduction catalyst, preferably finely divided Ag particles deposited on the carbon particles. The electrode was developed for use in metal-air cells. The hydrophobic layer enables the diffusion of oxygen through the pores both towards the current collector during oxygen reduction and out of the cell during oxygen evolution, while retaining electrolyte.

It should be noted that all the prior art mentioned above either presents electrodes with only one catalytic layer to which layers controlling gas or liquid diffusion are applied, or with more than one catalytic layer which also act as diffusion controllers. However, all catalytic layers contain both the oxidation and reduction catalysts. Despite the various attempts that have been undertaken to improve bifunctional electrodes, the proposed solutions have had a rather limited use and applicability.

A bifunctional electrode in which oxygen evolution and reduction catalytic regions are spatially separated is disclosed in patent EP 0082553 A (DIAMOND SHAMROCK CORP) 09.12.1982. The patent presents a porous three-layered bifunctional electrode consisting of a gas-side hydrophobic layer, an electrolyte-side hydrophilic layer and an intermediate rectifying layer of a semi-conducting material. The gas-side hydrophobic layer is an active area of the electrode during the gas consumption phase. The hydrophilic layer is an active layer for oxygen evolution and has a current collector associated with it. A rectifying layer is interposed between hydrophobic and hydrophilic layer and consists of semi-conducting material arranged in such a way that the gas-side layer is practically electrically inactive during the gas evolution phase. By so doing, substantially no undesired gas evolution can take place in this layer. Electron flow into or out of the gas-side layer is allowed freely during the gas consumption phase, but is strongly inhibited during the gas evolution phase.

Despite its potential to perform well, this electrode configuration suffers from a number of practical problems that limit its applicability. The semi-conducting layer introduces a forward bias voltage. This voltage can be limited provided that the battery be operated above room temperature. Furthermore, the semi-conductor material should be encapsulated to prevent chemical attack by the electrolyte. Finally, the construction of large electrodes turns out to be difficult due to the limited dimensions of semi-conductor panels. In this case, the patent presents an array configuration of small rectifying layers.

### Aims of the Invention

The invention aims at providing a bifunctional gas diffusion electrode which is sufficiently reversible with respect to the gas oxidation and reduction reactions and overcomes the drawbacks of prior art electrodes.

### Summary of the Invention

The present invention is related to novel bifunctional gas diffusion electrodes and to systems comprising such electrodes, as set out in the appended claims, in which a high degree of reversibility of the electrode is achieved through a spatial separation of the catalysts for gas evolution and gas consumption by providing a shielding layer between the two catalyst layers. At the electrolyte side of the shielding layer, a current collector and a layer having a high catalytic activity for gas evolution are provided. At the gas side a catalytic layer is provided having a high activity for gas consumption. The catalyst layers are chosen in such a way that the catalyst for gas consumption is not substantially participating when the electrode is in electrolysis mode and is fully participating in fuel cell mode. Likewise, the catalyst for gas evolution is not substantially participating when the electrode is in fuel cell mode, and fully participating when the electrode is in electrolysis mode.

According to the invention, the shielding layer is porous and electronically conductive. The shielding layer is not a semi-conducting layer. Furthermore, the shielding layer has little catalytic activity for gas consumption, little activity for gas evolution and a high corrosion resistance under the prevailing electrochemical conditions. According to the preferred embodiment, the shielding layer comprises a binder and particles of an electronically conductive material, preferably carbon type material. Alternatively, the carbon type material may be replaced by a metal powder, e.g. a nickel powder. The shielding layer preferably comprises macro-pores between the particles, said macro-pores preferably taking up between 10 and 40% of the volume of the shielding layer. The porosity and constituent materials of the shielding layer are chosen such that during electrolysis, the gas evolution takes place on the electrolyte side of the electrode and obstructs the flow of electrolyte to the gas side, due to the pores of the shielding layer being filled with gas, whereas during fuel cell mode, the pores are rapidly filled with electrolyte, to allow said electrolyte to reach the gas side part of the electrode, where gas consumption takes place.

The shielding layer preferably comprises particles having a specific surface area smaller than or equal to 20 m²/g, preferably between 5 and 15 m²/g, and more preferably around 10m²/g. These particles may be graphite, low surface area carbon or carbon black. The particles are preferably bound together by a binder. The binder may be a fluoropolymer, such as polytetrafluoroethylene (PTFE).

The current collector may comprise a woven metal mesh, a metal foam, a graphite felt or cloth. In a preferred embodiment, the current collector comprises Fe-expanded metal. A catalyst having a good activity for gas evolution is coated onto the current collector. In a preferred embodiment, the current collector is coated with sputtered nickel. The catalytic layer for gas consumption can be made of any material with sufficient activity for the gas consumption reaction. A typical layer is made of a carbon support with platinum or a platinum group type metal deposited on it. The particles are held together by a fluoropolymer binders, such as PTFE. In a still preferred embodiment, a gas diffusion layer is provided onto the catalytic layer for gas consumption, at the gas side.

The above concept is mainly applicable for an oxygen electrode in a reversible electroysis/fuel cell. In principle, the above concept also applies to the hydrogen electrode in a reversible hydrogen-oxygen electrolysis/fuel cell. However, when properly manufactured, standard hydrogen oxidation electrodes turn out to be suitable for fuel cell and electrolysis mode, without undue degradation occurring.

According to a second aspect of the invention, there is provided a reversible electrolysis/fuel cell comprising at least one bifunctional gas diffusion electrode according to the invention. In a preferred embodiment, said cell is a reversible hydrogen-oxygen electrolysis/fuel cell and the described bifunctional gas diffusion electrode is used for the evolution and consumption of oxygen gas.

In a still preferred embodiment for a reversible hydrogen-oxygen electrolysis/fuel cell comprising the described bifunctional gas diffusion electrode, the hydrogen electrode is provided with a porous structure that enables the hydrogen to escape into the gas compartment. A Zirfon^{®} layer is applied onto the hydrogen electrode at the electrolyte side to prevent a bulk escape of hydrogen gas into the electrolyte. In a more preferred embodiment, there is provided at the gas-side of the bifunctional oxygen electrode a gas compartment for storing the oxygen gas and a means for applying an overpressure to the oxygen gas in the gas compartment compared to the pressure of the electrolyte.

### Brief Description of the Drawings

Figure 1 depicts a cross-section of a bifunctional oxygen electrode according to the present invention.

Figure 2 depicts a cross-section of a bifunctional hydrogen electrode.

Figure 3 depicts a reversible electrolysis/fuel cell.

### Mode(s) for carrying out the invention

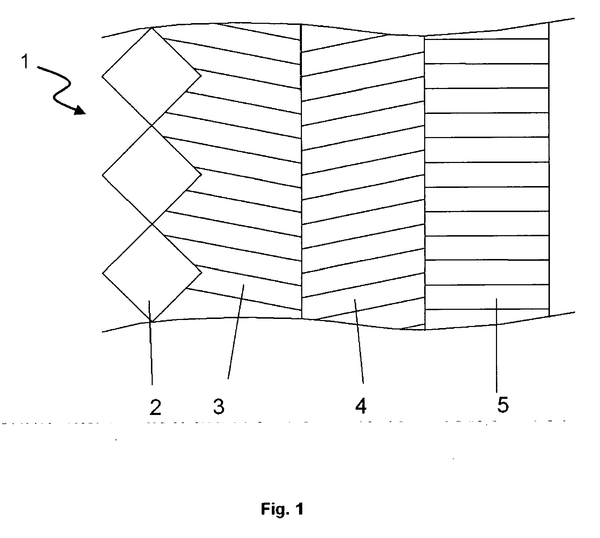

Figure 1 represents a cross-section of a bifunctional oxygen electrode 1, according to the invention. A current collector 2 is provided at the electrolyte-side. In one embodiment of the invention, the current collector 2 has a Fe-expanded metal skeleton. In another embodiment, the current collector is a woven metal mesh. Coating the current collector 2 with sputtered nickel enables it to have a good catalytic activity for oxygen evolution. The current collector may otherwise be coated with other suitable catalysts, or may be embedded in a layer comprising suitable catalysts.

The catalytic layer 4 at the gas side has a good activity for oxygen reduction. This layer may comprise active carbon and a fluoropolymer binder (e.g. polytetrafluoroethylene). The active carbon is coated with a catalyst having a good activity for oxygen reduction. In a preferred embodiment of the invention, the active carbon in catalytic layer 4 is coated with platinum or a platinum group metal type catalyst. By way of example, E-Vision^{®} K0305 is a material suitable for catalytic layer 4. At the air side of catalytic layer 4, a gas diffusion layer 5 may be provided. This layer may consist of E-Vision^{®} 28.

Between current collector 2 and catalytic layer 4 a shielding layer 3 is interposed. According to the invention, the shielding layer is porous and electronically conductive. It has also little or no catalytic activity and has a high resistance against electrochemical corrosion. According to the invention, the shielding layer is thus an electronically conductive layer, but not a semiconductor layer. In contrast to EP 0082553, where a gas evolution reaction in the catalytic layer for gas consumption is prevented by inhibiting the flow of electrons in or out of this layer by use of semi-conductor material, in the present invention, the gas evolution reaction in the catalytic layer for gas consumption is inhibited by shielding said catalytic layer from the electrolyte, thus by inhibiting the hydroxyl ions to reach the catalytic layer for gas consumption. As explained in more detail further, the shielding of the gas side layer of the electrode during gas evolution is obtained by the right choice of porosity and constituent materials for the shielding layer, not by producing the interposed layer from a semiconductor material.

The shielding layer according to the invention comprises a mixture of electronically conductive particles, preferably carbon particles, and a binder material, preferably a fluoropolymer binder such as PTFE. The carbon particles used have preferably a low specific area, to minimize the micro-porosity of the structure. In a preferred embodiment, the specific area of the carbon particles is smaller than or equal to 20 m²/g. In a more preferred embodiment, the specific area of the carbon particles lies in a range between 5 and 15 m²/g. A preferred value is around 10m²/g.

The shielding layer 3 may enhance its role as a spatial separator of the oxygen evolution and reduction reactions, through the presence of a right dose of macro-porosity. The macro-pores are mainly intergranular voids, their size being on the order of magnitude of the surrounding particles or grains. The macro-pores may equally be on a few orders of magnitude smaller than the surrounding particles. The macro-porosity can be obtained by adding a pore former to the preparation mixture for the shielding layer. A suitable pore former is e.g. ammonium bicarbonate. A pore former with appropriate grain size distribution should be employed in order to achieve a correct ratio between the different pores. By way of illustration, for preparing the shielding layer, a mixture of 48%wt graphite, 12%wt PTFE (polytetrafluoroethylene) and 40%wt pore former may be used. Depending on the process parameters such as heating temperature (see further), this will lead to a shielding layer with a macro-porosity of about 35% of the shielding layer's volume. Preferred values of the macro-porosity of a shielding layer according to the invention are between 10 and 40%.

According to a preferred embodiment, manufacturing of the porous gas diffusion layer 5, the catalytic layer 4 and the shielding layer 3 is based on dry mixing, agglomerating and calendering of a fluoropolymer powder (e.g. PTFE), carbon powders and catalysed carbon powders (the latter only for the catalytic layers). To build up the correct ratio between micro- and macro-porosity in the different electrode layers, a pore former with the appropriate grain size distribution may be applied.

For each layer a separate mixture is prepared. These mixtures may have varying concentrations of their constituents and are rolled into a layer of desired thickness. The layers are subsequently pressed onto each other and assembled onto the current collector 2 by rolling/calendering or by pressing. Finally, a heat treatment at temperatures between 60°C and 350°C under an inert gas atmosphere removes the pore former and sinters the fluoropolymer binder to mechanically strengthen the different porous electrode layers.

### Detailed Description of the Invention

The bifunctional oxygen electrode 1 operates as follows. In electrolysis mode, the active Ni-sputtered current collector grid 2 catalyses a fast oxygen evolution reaction creating a reaction gradient. The macro-pore volume in shielding layer 3 gets quickly filled with oxygen gas and expels the electrolyte from the pores in the shielding layer, thus effectively shielding the oxygen reduction catalytic layer 4 from the electrolyte. Furthermore, the oxygen reduction catalytic layer 4 is not very active for oxygen evolution. The result is that current collector 2 is the only active layer during electrolysis, while its neighbouring layers (shielding layer 3 and catalytic layer 4) hardly contribute to the oxygen evolution reaction.

In fuel cell mode, the macro-pores in shielding layer 3 are readily filled with electrolyte again. An electrolytic pathway from the electrolyte to the catalytic layer 4, active for oxygen reduction, is thus created which enables the oxygen reduction reaction in catalytic layer 4. The electronically conducting nature of shielding layer 3 allows sufficient electron flow towards catalytic layer 4 during oxygen reduction.

According to the preferred embodiment, the porous shielding layer 3 has a mixed hydrophobic and hydrophilic nature. On the one hand it must be hydrophobic to a certain extent in order to allow a quick bulk evacuation of electrolyte when oxygen evolution begins and hence enable a diffusion of oxygen through the layer 3. The hydrophobic nature of the shielding layer creates pathways through which the initially formed oxygen gas can escape at the beginning of oxygen evolution. The oxygen gas, in turn, will expel the electrolyte present in the porous structure. On the other hand, the shielding layer must also be partially hydrophilic in order to enable the macro-pores to be quickly filled with electrolyte again when oxygen reduction begins.

This mixed hydrophobic/hyrdophilic character is obtained by the right combination of porosities, and preferably by applying the abovementioned preferred values of macro-porosity and specfic area. It is further enhanced by the right choice of constituent materials: a fluoropolymer binder provides a hydrophobic character, while the conductive particles themselves can either be hydrophobic, or hydrophilic. It is also possible to combine porosity values outside the preferred ranges with materials of a specific hydrophobicity or hydrophilicity, which allow the final electrode to behave in the desired way. Therefore, the invention is not limited to shielding layers with the preferred ranges for macro-and micro-porosity.

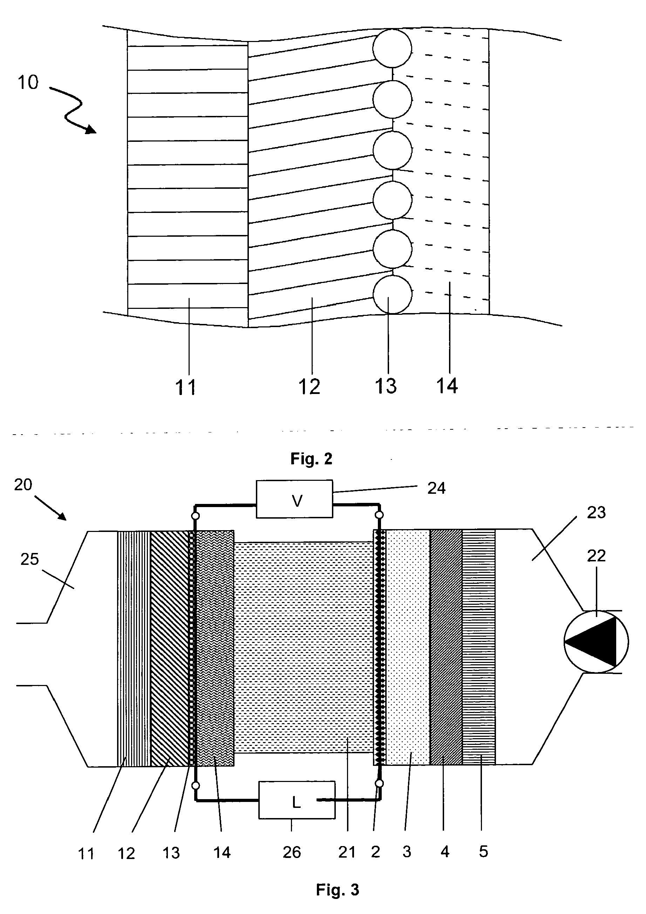

Bifunctional oxygen electrode 1 may be used in an electrolysis/fuel cell in combination with bifunctional hydrogen electrode 10, depicted in figure 2. Hydrogen electrode 10 may be an electrode according to the invention or it may be a standard hydrogen electrode, comprising a catalytic layer 12, active for both the hydrogen evolution and oxidation reactions, a woven nickel net 13 and a gas diffusion layer 11 at the gas side. Experiments have shown that the bulk escape of hydrogen gas into the electrolyte compartment can be prevented by applying a Zirfon^{®} layer 14 at the electrolyte side of the woven nickel net 13. Electrode 10, containing adequate porosities, behaves practically in a reversible way with respect to the hydrogen evolution and hydrogen oxidation reactions.

Figure 3 depicts a reversible hydrogen-oxygen electrolysis/fuel cell 20 according to the present invention. Such a cell combines bifunctional oxygen electrode 1 according to the invention and bifunctional hydrogen electrode 10 (standard or according to the invention). Current collector 2 of oxygen electrode 1 and the Zirfon^{®} layer 14 of hydrogen electrode 10 are separated by an electrolyte 21 (e.g. KOH/H2O). Gas diffusion layer 5 of oxygen electrode 1 borders an air or oxygen gas compartment 23 and gas diffusion layer 11 of hydrogen electrode 10 borders a hydrogen gas compartment 25. The current collectors 2 and 13 of both the bifunctional oxygen electrode and the bifunctional hydrogen electrode can be connected to a voltage source 24 that provides electrical energy either to the cell during gas evolution, or to an external load 26 during gas consumption. To enhance the protective function of shielding layer 3 in bifunctional oxygen electrode 1 during the oxygen evolution mode, the removal of electrolyte 21 from the porous catalytic layer 4 may be supported by the application of a slight oxygen overpressure in the oxygen gas compartment 23 with respect to the electrolyte pressure. This is shown schematically in figure 3 by a means 22, which may be a pump, compressor or ventilator, arranged for providing said overpressure.

The bifunctional electrode disclosed in the present invention shows a high degree of reversibility with respect to oxidation and reduction reactions and overcomes drawbacks of such electrodes of prior art. It can be successfully applied in e.g. reversible hydrogen-oxygen electrolysis/fuel cells, which might offer a solution for the storage of electrical energy.

Fluctuating energy sources, such as wind or solar energy, produce electricity at a rate which is uncoupled from demand. As a consequence, excess electrical energy is intermittently available. Modes for storing this excess electrical energy and make it useful during periods of peak demand are not straightforward. The reversible hydrogen-oxygen electrolysis/fuel cell of the present invention might constitute an economically viable way to use the excess electrical energy to electrolyse water into hydrogen and oxygen, and store these gases. Both gases can then be fed to the reversible fuel cell to produce electricity when needed.

## Claims

1. A bifunctional gas diffusion electrode (1), comprising
- an electrolyte-side layer (2) active for gas evolution and current collection means associated with said electrolyte-side layer,
- a gas-side layer (4) active for gas consumption and
- a shielding layer (3) interposed between the electrolyte-side layer and the gas-side layer,
**characterised in that** said shielding layer is porous and electronically conductive, without being a semiconductor.

2. The bifunctional gas diffusion electrode (1) according to claim 1, wherein said shielding layer is a porous layer comprising a binder material and particles of an electronically conductive material.

3. The bifunctional gas diffusion electrode according to claim 2, wherein the shielding layer comprises macro-pores between said particles.

4. The bifunctional gas diffusion electrode according to claim 3, wherein said macro-pores make up between 10 and 40% of the volume of said shielding layer.

5. The bifunctional electrode according to any one of claims 2 to 4, wherein said particles have a specific surface area smaller than or equal to 20m²/g and preferably around 10m²/g.

6. The bifunctional gas diffusion electrode according to any one of claims 2 to 5, wherein said electronically conductive material of the shielding layer (3) is a carbon type material.

7. The bifunctional gas diffusion electrode according to claim 6, wherein said electronically conductive material is graphite.

8. The bifunctional gas diffusion electrode according to any one of claims 2 to 5, wherein said electronically conductive material of the shielding layer (3) is a metal powder, preferably a nickel powder.

9. The bifunctional gas diffusion electrode according to any one of the claims 2 to 8, wherein said binder is a fluoropolymer.

10. The bifunctional electrode according to claim 9, wherein the fluoropolymer is polytetrafluoroethylene.

11. The bifunctional electrode according to any one of the preceding claims, further comprising a gas diffusion layer (5) in contact with the gas-side layer.

12. The bifunctional electrode according to any one of the preceding claims, wherein the electrolyte-side layer (2) comprises a Fe-based expanded metal.

13. The bifunctional electrode according to claim 12, wherein nickel is sputtered onto the expanded metal.

14. A reversible electrolysis/fuel cell comprising at least one bifunctional gas diffusion electrode (1) according to any one of claims 1 to 13.

15. A reversible hydrogen-oxygen electrolysis/fuel cell (20) according to claim 14, wherein said bifunctional gas diffusion electrode is the oxygen electrode, and further comprising a bifunctional electrode (10) suitable for the evolution and consumption of hydrogen, an electrolyte interposed between the bifunctional oxygen electrode and the bifunctional hydrogen electrode, and means for supplying oxygen to said oxygen electrode and hydrogen to said hydrogen electrode.

16. The reversible electrolysis/fuel cell according to claim 15, wherein said bifunctional hydrogen electrode comprises a Zirfon^{®} layer.

17. The reversible electrolysis/fuel cell according to claim 15 or 16, further comprising a gas compartment (23) for storing the oxygen from the oxygen evolution reaction and a means (22) for applying an overpressure to said oxygen in said gas compartment, compared to the pressure of the electrolyte.
